# EUROPÄISCHE PATENTSCHRIFT

(11) **EP 2 948 290 B1**
(45) Veröffentlichungstag und Bekanntmachung des Hinweises auf die Patenterteilung: **18.12.2019**
(21) Anmeldenummer: 13789227.9
(22) Anmeldetag: 29.10.2013
(51) Int. Cl.: B29C 48/92, B29B 7/60, B29C 48/14, B29C 48/25, B29B 7/42, B29B 7/48, B29B 7/72, B29C 48/285, B29C 48/27

(54) **VERFAHREN FÜR EINEN MATERIALWECHSEL BEI EINER EXTRUSIONSVORRICHTUNG UND DIE ENTSPRECHENDE VORRICHTUNG**
METHOD FOR CHANGING A MATERIAL IN AN EXTRUSION DEVICE AND THE CORRESPONDING APPARATUS
PROCÉDÉ POUR EFFECTUER UN CHANGEMENT DE MATÉRIAU DANS UN DISPOSITIF D'EXTRUSION ET LE DISPOSITIF CORRESPONDANT

(30) Priorität: 28.01.2013 DE 102013100812
(43) Veröffentlichungstag der Anmeldung: 02.12.2015
(73) Patentinhaber: Windmöller & Hölscher KG, 49525 Lengerich/Westf. (DE)
(72) Erfinder: BACKMANN, Martin, 49525 Lengerich (DE); BUSSMANN, Markus, 45147 Essen (DE); AVERMEYER, Ansgar, 49124 Georgsmarienhütte (DE); KULGEMEYER, Tobias, 49170 Hagen a.T.W. (DE)
(86) Internationale Anmeldenummer: PCT/EP2013/072647
(87) Internationale Veröffentlichungsnummer: WO 2014/114375

(56) Entgegenhaltungen:
- EP-A1- 1 647 386
- EP-A1- 1 647 386
- EP-A2- 0 318 170
- EP-A2- 1 188 539
- EP-A2- 2 236 261
- DE-A1- 1 802 694
- DE-A1-102004 051 196
- DE-B3-102011 112 016
- FR-A1- 2 608 498
- JP-A- H0 226 720
- JP-A- S59 131 438
- JP-A- S59 131 438
- JP-A- S63 218 330
- DATABASE WPI Week 198843 Thomson Scientific, London, GB; AN 1988-303646 XP002720721, -& JP S63 222829 A (SEKISUI CHEM IND CO LTD) 16. September 1988 (1988-09-16)
- DATABASE WPI Week 198944 Thomson Scientific, London, GB; AN 1989-322202 XP002720722, -& SU 1 452 693 A (UKR MACH TOOL RES) 23. Januar 1989 (1989-01-23)
- DATABASE WPI Week 201149 Thomson Scientific, London, GB; AN 2011-J35296 XP002725792, -& JP 2011 140220 A (SUMITOMO CHEM CO LTD) 21. Juli 2011 (2011-07-21)
- DATABASE WPI Week 200242 Thomson Scientific, London, GB; AN 2002-388079 XP002725793, -& JP 2002 067121 A (HITACHI CABLE LTD) 5. März 2002 (2002-03-05)
- DATABASE WPI Week 200242 Thomson Scientific, London, GB; AN 2002-388079 & JP 2002 067121 A (HITACHI CABLE LTD) 5 March 2002 (2002-03-05)
- DATABASE WPI Week 201149 Thomson Scientific, London, GB; AN 2011-J35296 & JP 2011 140220 A (SUMITOMO CHEM CO LTD) 21 July 2011 (2011-07-21)

## Beschreibung

Die vorliegende Erfindung betrifft ein Verfahren für einen Materialwechsel von einem Einsatzmaterial zu einem Folgematerial bei einer Extrusionsvorrichtung sowie eine Extrusionsanlage für die Herstellung eines Extrusionsproduktes.

Grundsätzlich sind Extrusionsanlagen bekannt. Sie werden verwendet, um Extrusionsprodukte herzustellen. Solche Extrusionsprodukte können Spritzgussprodukte, insbesondere Folienprodukte sein. Eine Möglichkeit von Extrusionsprodukten sind sogenannte Blasfolien. Hierfür ist die Extrusionsvorrichtung üblicherweise mit wenigstens einem Extruder mit einer Extruderschnecke versehen. Dieser Extruder wird mit Extrusionsmaterial versorgt. Das entsprechende Material, welches für die momentan eingestellte Rezeptur verwendet werden soll, kann auch als Einsatzmaterial bezeichnet werden. Für die Zufuhr von Einsatzmaterial sind üblicherweise Zufuhrvorrichtungen, wie z.B. ein Vorlaufbehälter und/oder eine Vorlaufwaage bekannt. Diese dienen dazu, eine dosierte Zuführung von Einsatzmaterial zur Extruderschnecke zur Verfügung stellen zu können.

Bei bekannten Extrusionsanlagen muss nach Beendigung der Herstellung eines ersten Extrusionsproduktes und vor dem Beginn der Herstellung eines zweiten Extrusionsproduktes mit unterschiedlichen Materialbestandteilen ein Materialwechsel erfolgen. Das bedeutet, dass anstelle des eingesetzten Einsatzmaterials ein Folgematerial der Extrusionsvorrichtung zugeführt wird. Dieser Materialwechsel wird bei bekannten Extrusionsanlagen komplett manuell durchgeführt. Hierfür wird nach Beendigung der Durchführung der ersten Rezeptur bei der Herstellung eines ersten Extrusionsproduktes häufig eine komplette Reinigung der Extrusionsanlage durchgeführt. Auch ist es bekannt, dass bei bekannten Extrusionsanlagen während einer Übergangsphase das neue Folgematerial in die Vorlaufbehälter bzw. die Vorlaufwaage eingefüllt wird. Nach einer gewissen Übergangszeit wird das Folgematerial das Einsatzmaterial komplett aus dem Vorlaufbehälter, der Vorlaufwaage und dem Extruder verdrängt haben. Das hergestellte Extrusionsprodukt während dieser Übergangszeit ist jedoch nicht mit definierten Eigenschaften gemäß der eingestellten Rezeptur versehen. Dementsprechend handelt es sich während dieser Übergangszeit bei dem hergestellten Extrusionsprodukt um Ausschuss. Nachteilhaft bei diesem Verfahren sind der hergestellte Ausschuss sowie der hohe Zeitaufwand beim manuellen Durchführen des Materialwechsels. Alternativ durchgeführte komplette interne Reinigungen der Extrusionsanlage sind ebenfalls sehr zeitintensiv und erzeugen damit hohe Kosten und Stillstandzeiten. Ein Verfahren für ein Materialwechsel von einem Einsatzmaterial zu einem Folgematerial bei einer Extrusionsvorrichtung für die Herstellung von Extrusionsprodukten ist ebenfalls in den Schriften EP 2 236 261 A2, DE 10 2004 051 196 A1 und JP S63 218339 A offenbart.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Materialwechsel, insbesondere automatisiert, durchführen zu können.

Voranstehende Aufgabe wird gelöst durch ein Verfahren mit den Merkmalen des Anspruchs 1 sowie eine Extrusionsanlage mit den Merkmalen des Anspruchs 6. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Extrusionsanlage und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient dem Materialwechsel von einem Einsatzmaterial zu einem Folgematerial bei einer Extrusionsvorrichtung für die Herstellung von Extrusionsprodukten. Ein solches Verfahren weist unter anderem die folgenden Schritte auf:
- Erkennen einer Materialwechselanforderung,
- Durchführen wenigstens eines Vorbereitungsschrittes für den Materialwechsel,
- Durchführen des Materialwechsels nach Abschluss des wenigstens einen Vorbereitungsschrittes.

Basierend auf einem erfindungsgemäßen Verfahren wird nunmehr für den Materialwechsel nicht mehr die Beendigung der Durchführung der Herstellung einer ersten Rezeptur hinsichtlich des Extrusionsproduktes abgewartet. Vielmehr erfolgt nun erfindungsgemäß eine Vorbereitung mithilfe wenigstens eines Vorbereitungsschrittes. Diese Vorbereitung erfolgt bereits vor Materialwechsel und insbesondere noch während der Durchführung der Herstellung eines Extrusionsproduktes mit dem Einsatzmaterial. Mit anderen Worten kann in paralleler Weise die Vorbereitung auf den Materialwechsel durchgeführt werden. Dieses parallele Arbeiten bringt einen Zeitvorteil mit sich, da parallel ausgeführte Arbeiten zu geringeren oder keinen Stillstandzeiten der Extrusionsanlage bzw. der Extrusionsvorrichtung mehr führen. Vielmehr kann durch ein erfindungsgemäßes Verfahren insbesondere komplett auf eine Stillstandzeit während des Materialwechsels für die Extrusionsvorrichtung verzichtet werden.

Vorbereitungsschritte können im Sinne der vorliegenden Erfindung in unterschiedlichster Weise ausgebildet sein. Entscheidend ist es jedoch, dass diese Vorbereitung bereits zu einem Zeitpunkt stattfindet, welcher vor dem Materialwechsel liegt. Insbesondere wird der Vorbereitungsschritt auch bereits vor der Durchführung des Materialwechsels abgeschlossen sein.

Unter einem Einsatzmaterial ist im Sinne der vorliegenden Erfindung das Material bzw. die Materialzusammensetzung zu verstehen, welches sich für die Herstellung einer ersten Rezeptur eines Extrusionsproduktes in der Extrusionsvorrichtung befindet. Unter dem Folgematerial ist im Sinne der vorliegenden Erfindung dasjenige Material bzw. die Materialzusammensetzung zu verstehen, welches für die nachfolgende Rezeptur bei der Herstellung eines weiteren, zweiten Extrusionsproduktes Einsatz finden soll. Nach dem Materialwechsel wird also das Folgematerial zum nächsten Einsatzmaterial mit Bezug auf den darauf wieder folgenden Materialwechsel.

Ein erfindungsgemäßes Verfahren ist insbesondere automatisiert bzw. teilautomatisiert. Vorzugsweise bezieht sich die Automation insbesondere auf solche Vorbereitungsschritte, welche bereits parallel zur Durchführung der Herstellung des Extrusionsproduktes mit dem Einsatzmaterial durchgeführt werden. So kann durch die Vorgabe einer Materialwechselanforderung bereits während der Herstellung mit dem Einsatzmaterial die Vorbereitung automatisiert durchgeführt werden. Der tatsächliche Materialwechsel findet dann manuell oder insbesondere ebenfalls automatisiert statt, so dass auch durch die Automation sichergestellt ist, dass die erfindungsgemäßen Vorteile der Zeitreduktion für den Materialwechsel sicher erzielt werden können. Darüber hinaus wird die Qualität des Materialwechsels durch den Vorbereitungsschritt in automatisierter Weise verbessert, dadurch, dass Einsatzmaterial und Folgematerial nur noch minimal miteinander vermischt werden.

Bei einem erfindungsgemäßen Verfahren ist es grundsätzlich unerheblich, ob die Extrusionsvorrichtung mit einem einzigen Einsatzmaterial oder mit unterschiedlichen Einsatzmaterialen gleichzeitig beschickt wird. Insbesondere können bei zwei oder mehr Einsatzmaterialien, z.B. Farbkomponenten in Form von Pigmenten als zusätzliches Einsatzmaterial, eingesetzt werden. So kann in einer Extrusionsvorrichtung ein einzelnes Einsatzmaterial oder ein Mix aus verschiedenen Einsatzmaterialien zum Einsatz kommen. Der erfindungsgemäße Vorbereitungsschritt bezieht sich dabei immer auf den Materialwechsel eines einzigen Einsatzmaterials. Wird beim Wechsel der Rezeptur bei der Herstellung eines Extrusionsproduktes ein Wechsel von zwei oder mehr Einsatzmaterialien notwendig, so kann das erfindungsgemäße Verfahren selbstverständlich parallel für sämtliche zu wechselnde Materialien durchgeführt werden.

Für diejenigen Teile des Verfahrens bzw. des Vorbereitungsschrittes, welche nicht automatisiert, sondern manuell durchgeführt werden müssen, ist vorzugsweise eine Führung des Bedienpersonals vorgesehen. So kann z.B. mithilfe einer Softwareapplikation bzw. einer optischen Anzeigenvorrichtung an der Extrusionsvorrichtung der aktuelle Status des Vorbereitungsschrittes bzw. der aktuelle Status des Materialwechsels angezeigt werden. Zusätzlich ist es möglich, dass über eine solche Software bzw. eine Anzeigenvorrichtung Hinweise bzw. detaillierte Arbeitsanweisungen ausgegeben werden, welche das Bedienpersonal für die Durchführung des Vorbereitungsschrittes und/oder des Materialwechsels leiten.

Vorzugsweise sind für jedes Einsatzmaterial an der Extrusionsvorrichtung zumindest ein Vorlaufbehälter und eine Vorlaufwaage vorhanden. Vorlaufbehälter und Vorlaufwaage sind z.B. mithilfe eines Fallrohres miteinander verbunden, so dass bei einem erfindungsgemäßen Verfahren auf die Daten von Sensorvorrichtungen zu diesen einzelnen Bauteilen zurückgegriffen werden kann. Insbesondere weist die Sensorvorrichtung einzelne Sensoren auf, die den Füllstand der Vorlaufwaage, den Füllstand des Vorlaufbehälters und den aktuellen Betriebsstatus und/oder den Füllstand des Fallrohres mitteilen. Solche Sensoren können auch als Initiatoren bezeichnet werden. So wird es möglich, einen Rückschluss zwischen der aktuellen Rezeptursituation des Einsatzmaterials und der zu erwartenden Rezeptursituation für den weiteren Verlauf bei der Herstellung des Extrusionsproduktes mit dieser Rezeptur zu treffen. Erfindungsgemäss wird eine Vorausberechnung stattfinden, zu welchem Zeitpunkt und unter welchen Konditionen eine Beendigung der Herstellung des Extrusionsproduktes mit der ersten Rezeptur erfolgt. Auf Basis dieses Wissens und dieser Vorausberechnung kann ein Vorbereitungsschritt noch exakter durchgeführt werden, wie dies später noch erläutert wird.

Eines der Ziele der vorliegenden Erfindung ist es, den Übergang zwischen dem Einsatzmaterial und dem Folgematerial möglichst kurz zu gestalten. Die in der Einleitung dieser Anmeldung beschriebene Übergangsphase soll dementsprechend möglichst kurz ausfallen. Dies führt zu einer besonders kurzen Zeit, welche keine verwertbare Art und Weise des Extrusionsproduktes zur Verfügung stellt. Vielmehr kann auf diese Weise der Ausschuss während des Materialwechsels reduziert werden. Insbesondere ist der Vorbereitungsschritt dabei darauf hin ausgelegt, dass eine Materialvermischung zwischen Einsatzmaterial und Folgematerial in der Saugleitung, dem Vorlaufbehälter, dem Fallrohr und/oder der Vorlaufwage minimiert bzw. vollständig vermieden wird. Die Materialmischung wird dementsprechend auf den Extruder selbst reduziert, so dass dieser mit hoher Sicherheit nicht leerlaufen kann. Damit kann eine besonders scharfkantige Trennung bei der Durchführung des Materialwechsels zwischen Einsatzmaterial und Folgematerial erzielt werden. Auch hierzu wird später noch näher ausgeführt.

Vorteilhaft kann es sein, wenn bei einem erfindungsgemäßen Verfahren als Vorbereitungsschritt das Entleeren eines Vorlaufbehälters der Extrusionsvorrichtung und das Befüllen des Vorlaufbehälters mit dem Folgematerial durchgeführt wird. Bei dieser Art des Vorbereitungsschrittes erfolgt eine exakte Trennung zwischen Einsatzmaterial und Folgematerial im Vorlaufbehälter. Das Entleeren des Vorlaufbehälters kann z.B. durch Vorausberechnung der Rezeptur erfolgen. So kann sichergestellt werden, dass der Vorlaufbehälter zu einem Zeitpunkt vollständig in die Vorlaufwaage entleert werden kann, zu welchem der Extruder noch bei der Herstellung der ersten Rezeptur des Extrusionsproduktes ist. Während dieser Herstellung aus der Vorlage der Vorlaufwaage heraus ist der Vorlaufbehälter also bereits leer und kann mit dem Folgematerial befüllt werden. Sobald sich der Füllstand der Vorlaufwaage soweit reduziert hat, dass die Gefahr des Leerlaufens des Extruders bestehen würde, kann der Vorlaufbehälter wieder geöffnet und die Vorlaufwaage mit dem Folgematerial befüllt werden. Somit befindet sich auch in der Vorlaufwaage während des Materialwechsels nur eine sehr geringe Vermischung zwischen Einsatzmaterial und Folgematerial. Es entsteht also eine relativ scharfkantige Abgrenzung zwischen dem Folgematerial und dem Einsatzmaterial am Zuführende der Vorlaufwaage und damit auch über den Verlauf des Extruders. Selbstverständlich kann das Entleeren des Vorlaufbehälters auch aktiv in einen separaten Behälter erfolgen. So kann der Vorlaufbehälter mit überschüssigem Material des Einsatzmaterials, welches nicht mehr für die aktuelle Rezeptur bei der Herstellung des Extrusionsproduktes benötigt wird, komplett entleert werden. Diese Entleerung kann als Ausschuss entsorgt werden. Jedoch ist es auch möglich, aus dem Vorlaufbehälter, welcher im Wesentlichen reines Einsatzmaterial enthält, eine Rückführung in den Sammelbehälter bzw. das Silo mit diesem Einsatzmaterial durchzuführen. Somit kann nicht nur eine Reduktion des Ausschusses durch Minimierung der Übergangszeit zwischen Einsatzmaterial und Folgematerial erzielt werden, sondern vielmehr auch eine Reduktion des Materialverbrauchs. Überschüssiges Material aus dem Vorlaufbehälter wird also sozusagen zurückgewonnen bzw. sortenrein zurückgeführt.

Vorteilhaft ist es weiter, wenn bei einem erfindungsgemäßen Verfahren als Vorbereitungsschritt das Entleeren einer Vorlaufwaage und/oder eines Fallrohres zwischen einem Vorlaufbehälter und der Vorlaufwaage durchgeführt wird, insbesondere in Form eines Leersaugens. Zusätzlich oder alternativ zu der Ausführungsform, wie sie im voranstehenden Absatz erläutert worden ist, kann als Vorbereitungsschritt auch eine Füllstandsanpassung des Fallrohres und/oder der Vorlaufwaage erfolgen. Diese Anpassung kann ebenfalls z.B. durch Rezepturberechnung und damit einer Vorausberechnung des weiteren Extrusionszustandes erfolgen. Somit kann in der Vorlaufwaage über die Füllstandsbestimmung sichergestellt werden, dass in der Vorlaufwaage im Wesentlichen exakt die noch notwendige Restmenge für die Durchführung der Herstellung bis zum Ende der ersten Rezeptur mit dem Einsatzmaterial für das Extrusionsprodukt vorliegt. Jedoch ist es auch denkbar, dass eine Puffermenge innerhalb der Vorlaufwaage an Einsatzmaterial vorliegt. Diese Puffermenge stellt sicher, dass auch bei unvorhergesehenen Fällen ein Leerlauf des Extruders verhindert wird. Diese Puffermenge muss jedoch für den Materialwechsel bei dieser Ausführungsform eines erfindungsgemäßen Verfahrens entfernt werden. So kann in analoger Weise auch die Vorlaufwaage aktiv entleert werden. Dies kann bei laufendem oder bei stehendem Extruder stattfinden. Das Entleeren kann ebenfalls wieder in einem separaten Sammelbehälter erfolgen. Jedoch ist es auch möglich, dass eine sortenreine Rückführung des Einsatzmaterials aus dem Fallrohr und/oder aus der Vorlaufwaage in ein entsprechendes Silo als Sammelbehälter für das Einsatzmaterial durchgeführt wird. Somit können hier die gleichen Vorteile erzielt werden, wie sie im voranstehenden Absatz erläutert worden sind. Bei der Rückführung kann auch ein aktives Leersaugen erfolgen. So kann z.B. am Fallrohr und/oder an der Vorlaufwaage ein Leersaugventil angeordnet sein, um über einen Unterdruck ein Entleeren der jeweiligen Volumina zu erzielen.

Vorteilhaft ist es darüber hinaus, wenn bei einem erfindungsgemäßen Verfahren das Erkennen einer Materialwechselanforderung durch die Überwachung der Rezepturmenge und einer Vorausberechnung der noch durchzuführenden Extrusionsmenge erfolgt. So kann bei einer Extrusionsvorrichtung eine Regeleinheit zur Ausführung eines erfindungsgemäßen Verfahrens vorgegeben sein. In dieser Regeleinheit kann vom Bedienpersonal die gewünschte Extrusionsmenge (Produktmenge) bei der Herstellung des Extrusionsproduktes vorgegeben werden. Es ist also bekannt, wie lange der Extruder für die Herstellung der ersten Variante des Extrusionsproduktes mit dem Einsatzmaterial benötigt. So kann aktiv von der Regeleinheit vorausberechnet werden, zu welchem Zeitpunkt noch welche Restzeit für die Herstellung dieser vordefinierten Menge an Extrusionsmaterial der ersten Rezeptur benötigt wird. Außerdem ist bekannt, wie lange ein vordefinierter Vorbereitungsschritt benötigt, um abgeschlossen zu sein. Mit diesen beiden Daten kann die Regeleinheit nun bei einem erfindungsgemäßen Verfahren vorausberechnen, wann mit der Vorbereitung als Vorbereitungsschritt begonnen werden muss, so dass möglichst wenig Zeit für den Stillstand des Extruders benötigt wird. Insbesondere wird der Vorbereitungsschritt im Wesentlichen so ausgeführt, dass er zu dem Zeitpunkt abgeschlossen ist, zu welchem auch die geplante Herstellmenge des Extrusionsproduktes erreicht ist. Es erfolgt also vorzugsweise ein komplett parallele Ausführung des Vorbereitungsschrittes und der Herstellung der Restmenge des Extrusionsproduktes. Die Erkennung einer Materialwechselanforderung kann auf diese Weise insbesondere automatisiert von der Regeleinheit selbst vorgegeben werden.

Ein weiterer Vorteil ist es, wenn bei einem erfindungsgemäßen Verfahren als Vorbereitungsschritt ein Umschalten von einem ersten, großen Vorlaufbehälter mit dem Einsatzmaterial auf einen zweiten, kleineren Vorlaufbehälter mit dem Einsatzmaterial erfolgt. Anschließend werden ein Leeren des ersten, großen Vorlaufbehälters und ein Befüllen des ersten, großen Vorlaufbehälters mit dem Folgematerial durchgeführt. Selbstverständlich kann bei dem Wissen über eine besonders kleine Rezepturmenge bei der Herstellung des Extrusionsproduktes auch von Anfang an der kleine Vorlaufbehälter Verwendung finden. Die Verwendung von zwei separaten Vorlaufbehältern ermöglicht es ebenfalls eine saubere Trennung zwischen Einsatzmaterial und Folgematerial durchzuführen. Diese Trennung beeinträchtigt jedoch nicht die Funktionsweise des Extruders bzw. der Extrusionsvorrichtung. So kann auch dieser Vorbereitungsschritt des Wechsels und des Befüllens bzw. Entleerens des großen Vorlaufbehälters wieder parallel zur Herstellung des Extrusionsproduktes erfolgen. Somit können auch hier die erfindungsgemäßen Vorteile erzielt werden.

Vorteilhaft ist es ebenfalls, wenn bei einem erfindungsgemäßen Verfahren als Vorbereitungsschritt eine Reinigung der Extrusionsvorrichtung oder von Teilen der Extrusionsvorrichtung vom Einsatzmaterial durchgeführt wird. Während der Durchführung eines Extrusionsvorganges kann es geschehen, dass Einsatzmaterial an Teilen der Extrusionsvorrichtung haften bleibt. Dies bezieht sich auf die Saugleitung, den Vorlaufbehälter, das Fallrohr, die Vorlaufwaage und den Extruder selbst. Teil eines Vorbereitungsschrittes kann daher ein Reinigungsschritt sein, welcher exakt diese Rückstände des Einsatzmaterials beseitigt oder beseitigbar macht. Dieser Reinigungsschritt kann während der Durchführung des Extrusionsvorganges und/oder im Stillstand der Extrusionsvorrichtung durchgeführt werden.

Bei einem Verfahren gemäß der Erfindung wird als Reinigungsschritt einer der nachfolgenden Schritte durchgeführt wird:
- Aktivieren von wenigstens einer Klopfeinheit zum Loslösen von Resten des Einsatzmaterials,
- Aktivieren eines Ausblassystems,
- Umkehren der Drehrichtung einer Dosierschnecke,
- Erzeugung eines Luftwirbels insbesondere eines zyklonartigen Luftwirbels
- Erzeugung einer Druckwelle oder einer Unterdruckwelle

Bei der voranstehenden nicht abschließenden Liste handelt es ich um eine Aufzählung von möglichen Reinigungsschritten. Eine Klopfeinheit dient dazu insbesondere noch granulatförmiges Einsatzmaterial im Vorlaufbehälter, im Fallrohr und/oder in der Vorlaufwaage zu beheben. Die Klopfeinheit kann dabei insbesondere als Vibrationseinheit ausgebildet sein, um den Reinigungsschritt durchzuführen. Ein Ausblassystem dient dazu, verschiedene Luftströmungen zur Verfügung zu stellen. Insbesondere handelt es sich um einen Luftwirbel, der z.B. zyklonartig ein Ausblasen des Einsatzmaterials aus dem jeweiligen Bauteil erlaubt. Wird eine Dosierschnecke z.B. in dem Vorlaufbehälter für die Dosierung vorgesehen, so kann durch ein Ändern der Drehrichtung ebenfalls ein Reinigungsschritt zur Verfügung gestellt werden.

Ebenfalls von Vorteil ist es, wenn bei einem erfindungsgemäßen Verfahren als Vorbereitungsschritt ein Sauberfahren der Extrusionsvorrichtung mit einem Zwischenmaterial durchgeführt wird. Insbesondere bei hohen Viskositätsunterschieden im geschmolzenen Zustand zwischen Einsatzmaterial und Folgematerial kann ein solches Zwischenmaterial als Puffer von Vorteil sein. Das Sauberfahren dient also insbesondere dem Säubern der einzelnen Bauteile der Extrusionsvorrichtung von Einsatzmaterial. Darüber hinaus dient das Zwischenmaterial dazu, dass aufgrund von hohen Viskositätsunterschieden Vermischungen zwischen dem Einsatzmaterial und dem Folgematerial besser bzw. insbesondere vollständig vermieden werden können. Damit wird über das Zwischenmaterial sichergestellt, dass eine saubere Trennung zwischen den beiden unterschiedlichen Rezepturen der Extrusionsprodukte vorliegt. Für das Einführen des Zwischenmaterials kann z.B. ein Materialbypass vorgesehen sein, um das Zwischenmaterial aus einem separaten Vorlaufbehälter und/oder einer separaten Vorlaufwaage in den Extruder einführen zu können.

Bei dem erfindungsgemässen Verfahren wird nach dem Vorbereitungsschritt ein Sicherungsschritt durchgeführt wird, welcher der folgenden Schritt aufweist:
- Abfrage der Installation aller notwendigen Behälter.

Durch den Sicherungsschritt wird sichergestellt, dass automatisch und/oder manuell durchgeführte Vorbereitungsschritte tatsächlich erfolgt sind bzw. in richtiger Weise durchgeführt worden sind. Damit kann eine Sicherungsfunktion zur Verfügung gestellt werden, welche bei nicht sorgsam oder nicht richtig durchgeführten Vorbereitungsschritten den nachfolgenden Materialwechsel stoppt. Insbesondere bei einer Automation kann damit eine Rückkopplungsschleife zur Verfügung gestellt werden, welche Fehlausführungen beim Materialwechsel unterbindet.

Ein weiterer Gegenstand der vorliegenden Erfindung ist eine Extrusionsanlage für die Herstellung eines Extrusionsproduktes. Diese Extrusionsanlage ist mit wenigstens einer Extrusionsvorrichtung versehen, welche einen Extruder, eine Vorlaufwaage zur Beschickung des Extruders und zumindest einen Vorlaufbehälter zur Beschickung der Vorlaufwaage aufweist. Eine erfindungsgemäße Extrusionsanlage zeichnet sich dadurch aus, dass wenigstens eine Sensorvorrichtung für die Bestimmung des Füllstands in dem zumindest einen Vorlaufbehälter und/oder in der Vorlaufwaage vorgesehen ist. Weiter ist wenigstens eine Kontrolleinheit vorgesehen, welche für die Ausführung eines erfindungsgemäßen Verfahrens ausgebildet ist. Dementsprechend bringt eine erfindungsgemäße Extrusionsanlage die gleichen Vorteile mit sich, wie sie ausführlich mit Bezug auf ein erfindungsgemäßes Verfahren erläutert worden sind. Insbesondere sind die Sensorvorrichtung, der Vorlaufbehälter und/oder die Vorlaufwaage in einer Weise ausgestattet, dass sie die notwendigen Bauteile aufweisen, die die Durchführung des erfindungsgemäßen Verfahrens erlauben. Zusätzlich kann z.B. eine Saugvorrichtung für das Ansaugen von Granulat aus einem Silo zur Förderung in den Vorlaufbehälter vorhanden sein. Zwischen dem Vorlaufbehälter und der Vorlaufwaage ist es möglich, dass ein Fallrohr zur Überführung des Einsatzmaterials vorhanden ist. Die Sensorvorrichtung kann unterschiedliche Sensoren aufweisen, die an unterschiedlichen Positionen platziert sind. Selbstverständlich kann die Sensorvorrichtung in unterschiedlichster Weise bzw. mit unterschiedlichster Sensorfunktionalität ausgestattet sein. Die Sensorvorrichtung kann auch als Initiatorvorrichtung bezeichnet werden.

Eine erfindungsgemäße Extrusionsanlage lässt sich dahingehend weiterbilden, dass die Sensorvorrichtung wenigstens einen Sensor gemäß der nachfolgenden Liste aufweist:
- Ultraschallsensor
- Infrarotsensor
- Optischer Sensor
- Lasersensor
- Wägezelle
- Kapazitiver Sensor
- Induktiver Sensor
- Drehflügelsensor
- Schwimmsensor

Bei der voranstehenden nicht abschließenden Liste handelt es sich um eine Aufzählung möglicher Sensoren der erfindungsgemäßen Sensorvorrichtung. Dies führt dazu, dass eine Füllstandsmessung an der jeweiligen Position möglich wird. Auch die Erkennung des Zustandes des jeweiligen Bauteils mit Bezug auf das darin enthaltene Material in anderer Weise als dem Füllstand, ist im Sinne der vorliegenden Erfindung denkbar. So kann z.B. die Materialdichte, die Schüttdichte, das Gewicht oder andere Parameter zur Bestimmung des entsprechenden Zustandes ermittelt werden.

Darüber hinaus ist es von Vorteil, wenn bei einer erfindungsgemäßen Extrusionsanlage zwischen dem Vorlaufbehälter und der Vorlaufwaage eine mechanisch verriegelbare Vorlaufklappe angeordnet ist. Diese Vorlaufklappe kann auch als Vorlaufventil bezeichnet werden. Sie dient dazu, den Vorlaufbehälter komplett gegen die Vorlaufwaage abzuschließen. Erfolgt z.B. ein Entleeren des Vorlaufbehälters im kompletter Weise, so kann der entleerte Vorlaufbehälter über die mechanisch verriegelte Vorlaufklappe abgedichtet werden und anschließend mit dem Folgematerial befüllt werden. Die mechanische Verriegelung erfolgt insbesondere durch die Antriebsvorrichtung.

Ebenfalls vorteilhaft ist es, wenn bei einer erfindungsgemäßen Extrusionsanlage wenigstens eine Reinigungseinheit vorgesehen ist, aufweisend zumindest eine der folgenden Ausbildungen:
- Klopfeinheit
- Ausblaseinheit
- Dehnbare Behälterwand
- Poröser Schneckenzylinder
- Aufklappbarer Schneckenzylinder
- Drehbarer Schneckenzylinder

Bei der voranstehenden Aufzählung handelt es sich um eine nicht abschließende Liste. Die Klopfeinheit und die Ausblaseinheit wurden bereits mit Bezug auf das erfindungsgemäße Verfahren hinsichtlich ihrer Wirkungsweise beschrieben. Bei einer dehnbaren Behälterwand kann durch elastische Verformung der Behälterwand ein Lösen von festklebendem Einsatzmaterial erfolgen. Die entsprechende Ausbildung des Schneckenzylinders einer Dosierschnecke in poröser Weise, in aufklappbarer Weise oder in drehbarer Weise, bringt ebenfalls die Möglichkeit des Lösens von festklebendem Einsatzmaterial mit sich.

Weiter Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform einer Extrusionsvorrichtung für die Durchführung eines erfindungsgemäßen Verfahrens,
- Fig. 2: eine weitere Ausführungsform einer Extrusionsvorrichtung für die Durchführung eines erfindungsgemäßen Verfahrens,
- Fig. 3: eine Detaildarstellung eines Vorlaufbehälters einer Extrusionsvorrichtung,
- Fig. 4: eine Ausführungsform einer erfindungsgemäßen Extrusionsanlage und
- Fig. 5: eine Ausführungsform einer Dosierschnecke.

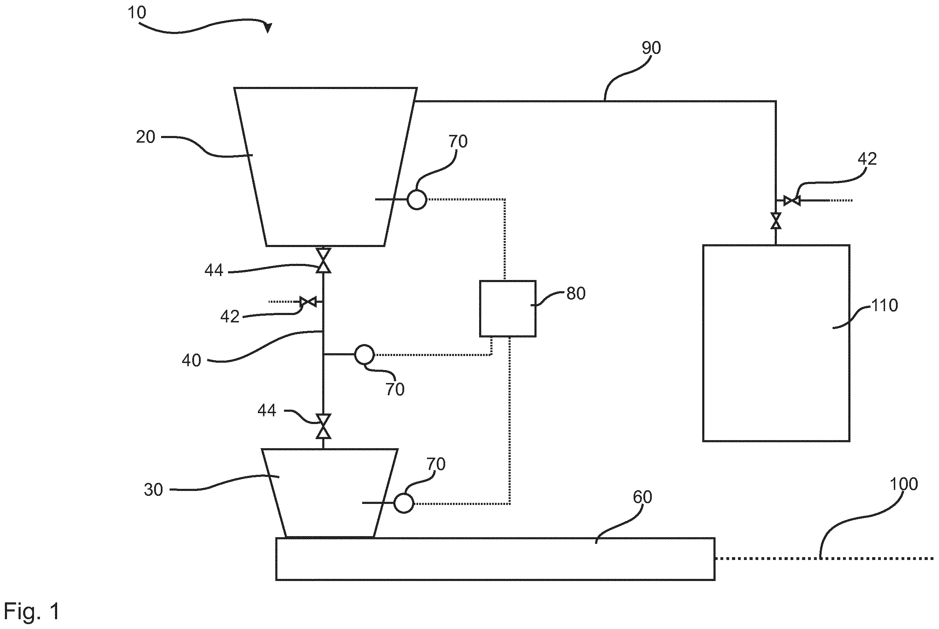

In Fig. 1 ist schematisch als Fließdiagramm eine Extrusionsvorrichtung 10 dargestellt. Diese weist einen Extruder 60 auf, welcher mit einer Extruderschnecke (nicht dargestellt) versehen ist. Der Extruder 60 wird über eine Vorlaufwaage 30 mit Einsatzmaterial beschickt. Darüber hinaus ist ein Vorlaufbehälter 20 vorgesehen, in welchem Einsatzmaterial angeordnet ist. Über ein Fallrohr 40 kann das Einsatzmaterial vom Vorlaufbehälter 20 in die Vorlaufwaage 30 geführt werden.

Weiter sind Sensorvorrichtungen 70 zu erkennen, welche in Kommunikationsverbindung mit einer Regeleinheit 80 ausgebildet sein. Im Fallrohr 40 ist darüber hinaus eine Vorlaufklappe 44 in ventilartiger Weise dargestellt. Darüber hinaus ist ein Leersaugventil 42 im Fallrohr 40 angeordnet.

Bei einem erfindungsgemäßen Verfahren wird im stationären Produktionszustand dieser Extrusionsvorrichtung 10 eine Materialwechselanforderung erkannt bzw. vorgegeben. Dann kann anschließend ein Vorbereitungsschritt in erfindungsgemäßer Weise durchgeführt werden. So kann z.B. der Vorlaufbehälter 20 komplett entleert werden, vor oder nachdem die Vorlaufklappe 44 geschlossen worden ist. Nach kompletter Entleerung wird anschließend der Vorlaufbehälter 20 mit Folgematerial ausgefüllt. Alternativ ist es auch möglich eine insbesondere aktive Entleerung der Vorlaufwaage 30 und des Fallrohres 40 z.B. über das Leersaugventil 42 zur Verfügung zu stellen.

Weiter ist in der Fig. 1 ein Silo 110 dargestellt, aus welchem der Vorlaufbehälter 20 gefüllt werden kann. Die Füllung erfolgt über eine Saugleitung 90, welche mit Vakuum beaufschlagt wird. Bei einem Materialwechsel kann nun das Vakuum verstärkt und gleichzeitig ein Leersaugventil 42 an der Saugleitung 90 geöffnet werden. Zusätzlich wird vorzugsweise der Zugang zum Silo 110 über ein weiteres Ventil geschlossen. Auf diese Weise kann auch die Saugleitung 90 auf den Materialwechsel mit reduzierter Vermischung von Einsatzmaterial und Folgematerial vorbereitet werden.

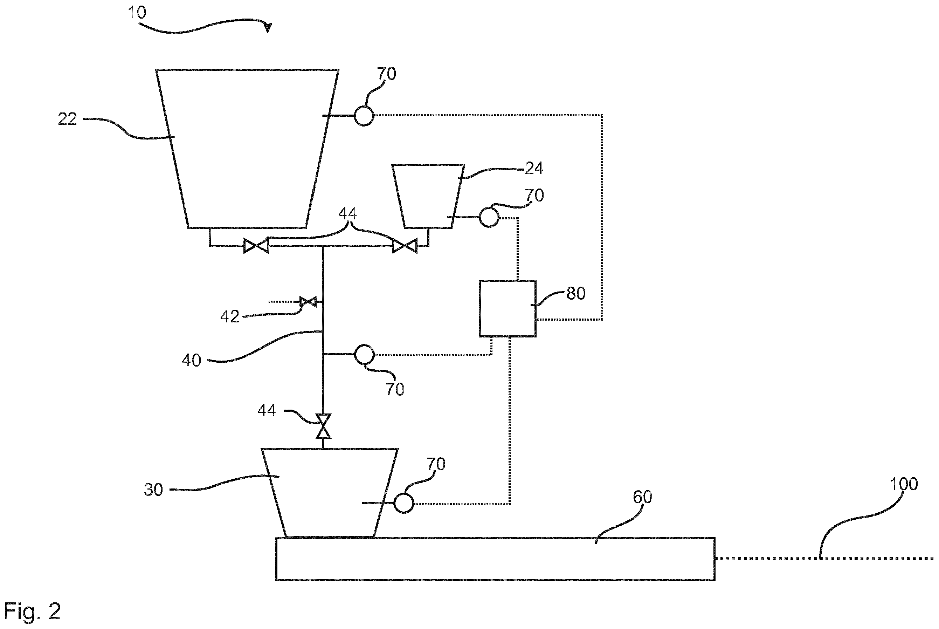

Weiter ist in Fig. 1 und Fig. 2 eine zusätzliche Vorlaufklappe 44 am unteren Ende des Fallrohrs 40 angeordnet. Auf diese Weise kann eine Entleerung des Vorlaufbehälters 20 in das Fallrohr erfolgen, um anschließend den Vorlaufbehälter 20 mit dem Folgematerial zu befüllen. Damit kann auch das Fallrohr 40 für die Disposition des Einsatzmaterials verwendet werden. Über die im Fallrohr 40 angeordnete Sensorvorrichtung 70 kann der Füllstand auch im Fallrohr 40 überwacht werden.

Fig. 2 zeigt eine Variante einer Extrusionsvorrichtung 10, bei welcher ein erster, großer Vorlaufbehälter 22 und ein zweiter, kleinerer Vorlaufbehälter 24 vorgesehen sind. Es kann zwischen diesen beiden Vorlaufbehältern umgeschaltet werden, so dass dementsprechend zwei Vorlaufklappen 44 vorgesehen sind. Beim Umschalten vom großen Vorlaufbehälter 22 auf den kleinen Vorlaufbehälter 24 kann anschließend ein komplettes Entleeren des ersten, großen Vorlaufbehälters 22 und nachfolgendes Befüllen mit Folgematerial erfolgen. Auch hier ist es wieder möglich, eine Vermischung zwischen Einsatzmaterial und Folgematerial im Wesentlichen vollständig zu verhindern.

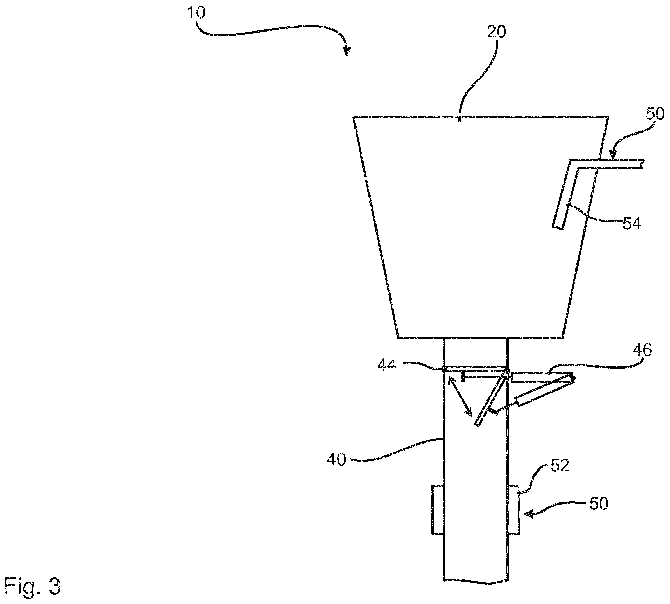

Fig. 3 zeigt schematisch verschiedene Möglichkeiten von Reinigungseinheiten 50. So ist es möglich, dass am Fallrohr 40 als Reinigungseinheit 50 eine Klopfeinheit 52 vorgesehen ist. Diese dient dazu, eine mechanische Einflussnahme in Form von Vibration oder Klopfen auf das Fallrohr 40 auszuüben. Festklebende Materialreste von Einsatzmaterial lösen sich auf diese Weise. Weiter ist zu erkennen, dass gemäß der Ausführungsform in Fig. 3 ein Ausblassystem 54 als Reinigungseinheit 50 vorgesehen ist. Hierüber kann ein Druckluftstoß oder sogar ein zyklonartiger Wirbel zur Verfügung gestellt werden, welcher in erfindungsgemäßer Weise die Reinigung des Vorlaufbehälters 20 ermöglicht. Selbstverständlich können die einzelnen Bauelemente auch zwischen dem Vorlaufbehälter 20 und einem nicht dargestellten Materialabscheider zusätzlich oder alternativ angeordnet sein.

In Fig. 3 ist ebenfalls eine detaillierte Ausgestaltung der Vorlaufklappe 44 mit einem Antrieb 46 dargestellt. Dieser Antrieb 46 dient insbesondere auch der mechanischen Verriegelung der Vorlaufklappe 44 in dem geschlossenen Zustand, so dass eine saubere Trennung zwischen diesen Volumina und damit die Vermeidung der Vermischung zwischen Folgematerial und Einsatzmaterial gegeben sein kann.

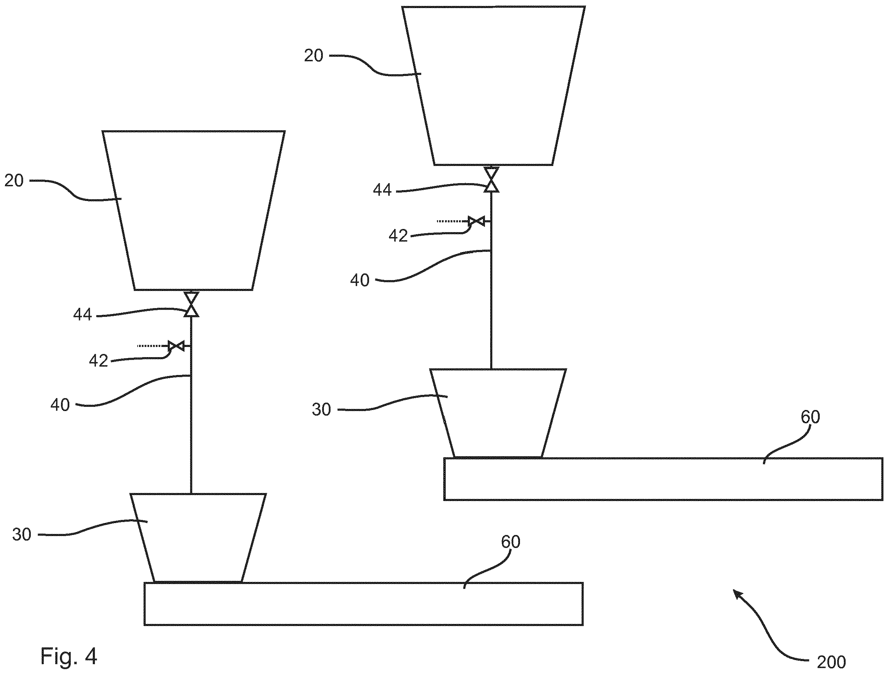

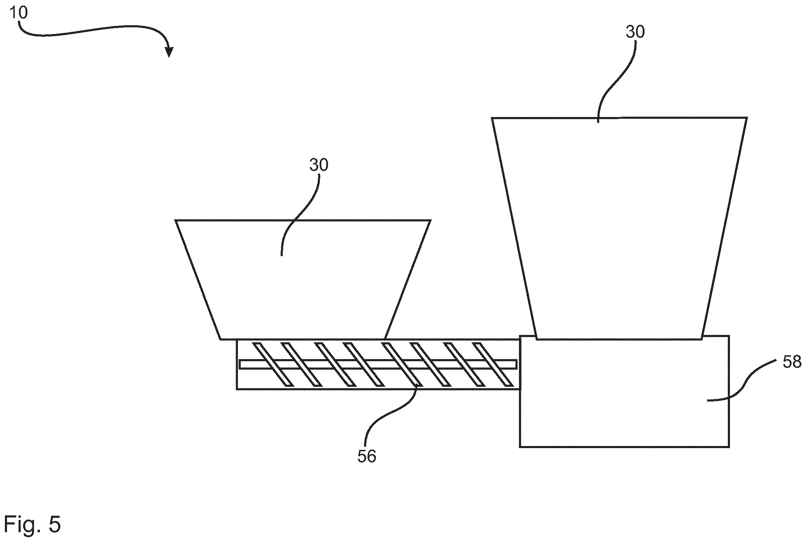

Fig. 4 zeigt eine Extrusionsanlage 200, bei welcher schematisch zwei Extrusionsvorrichtungen 10 gemäß Ausführungsform der Fig. 1 miteinander kombiniert sind. In der Fig. 5 ist eine Möglichkeit des Anschlusses für Zusatzkomponenten dargestellt. So kann über eine Dosierschnecke 56 aus einer Vorlaufwaage 30 für die Zusatzkomponente diese in eine Mischvorrichtung 58 eingebracht werden. In der Mischvorrichtung 58 erfolgt die Vermischung mit der Hauptkomponente des Einsatzmaterials aus der entsprechenden (hier rechts angeordneten) Vorlaufwaage 30.

### Bezugszeichenliste

- 10: Extrusionsvorrichtung
- 20: Vorlaufbehälter
- 22: erster, großer Vorlaufbehälter
- 24: zweiter, kleinerer Vorlaufbehälter
- 30: Vorlaufwaage
- 40: Fallrohr
- 42: Leersaugventil
- 44: Vorlaufklappe
- 46: Antrieb
- 50: Reinigungseinheit
- 52: Klopfeinheit
- 54: Ausblassystem
- 56: Dosierschnecke
- 58: Mischvorrichtung
- 60: Extruder
- 70: Sensorvorrichtung
- 80: Kontrolleinheit
- 90: Saugleitung

- 100: Extrusionsprodukt
- 110: Silo
- 200: Extrusionsanlage

## Patentansprüche

1. Verfahren für einen Materialwechsel von einem Einsatzmaterial zu einem
Folgematerial bei einer Extrusionsvorrichtung (10) mit einer Kontrolleinheit (80) für die Herstellung von
Extrusionsprodukten (100), wobei die Kontrolleinheit (80) ausgebildet ist die folgende Verfahrensschritte auszuführen:
- Erkennen einer Materialwechselanforderung,
- Durchführen wenigstens eines Vorbereitungsschrittes für den Materialwechsel,
- Durchführen des Materialwechsels nach Abschluss des wenigstens einen Vorbereitungsschrittes,
wobei das Erkennen einer Materialwechselanforderung durch eine Überwachung einer Rezepturmenge und einer Vorausberechnung einer noch durchzuführenden Extrusionsmenge erfolgt, wobei als Vorbereitungsschritt eine Reinigung der Extrusionsvorrichtung (10) oder von Teilen der Extrusionsvorrichtung (10) vom Einsatzmaterial durchgeführt wird, **dadurch gekennzeichnet dass** als Reinigungsschritt einer der nachfolgenden durchgeführt wird:
- Aktivieren von wenigstens einer Klopfeinheit (52) zum Loslösen von Resten des Einsatzmaterials,
- Aktivieren eines Ausblassystems (54),
- Umkehren der Drehrichtung einer Dosierschnecke (56),
- Erzeugung eines Luftwirbels, oder
- Erzeugung einer Druckwelle oder einer Unterdruckwelle, wobei nach dem Vorbereitungsschritt ein Sicherungsschritt durchgeführt wird, welcher den folgenden Schritt aufweist:
- Abfrage der Installation aller notwendigen Behälter.

2. Verfahren nach Anspruch 1,
**dadurch gekennzeichnet,**
**dass** als Vorbereitungsschritt das Entleeren eines Vorlaufbehälters (20) der Extrusionsvorrichtung (10) und das Befüllen des Vorlaufbehälters (20) mit dem Folgematerial durchgeführt wird.

3. Verfahren nach einem der vorangegangenen Ansprüche,
**dadurch gekennzeichnet,**
**dass** als Vorbereitungsschritt das Entleeren einer Vorlaufwaage (30) und/oder eines Fallrohres (40) zwischen einem Vorlaufbehälter (20) und der Vorlaufwaage (30) und/oder einer Saugleitung (90) durchgeführt wird, insbesondere in Form eines Leersaugens.

4. Verfahren nach einem der vorangegangenen Ansprüche,
**dadurch gekennzeichnet,**
**dass** als Vorbereitungsschritt ein Umschalten von einem ersten, großen Vorlaufbehälter (22) mit dem Einsatzmaterial auf einen zweiten, kleineren Vorlaufbehälter (24) mit dem Einsatzmaterial und anschließend ein Leeren des ersten, großen Vorlaufbehälters (22) und ein Befüllen des ersten, großen Vorlaufbehälters (22) mit dem Folgematerial durchgeführt wird.

5. Verfahren nach einem der vorangegangenen Ansprüche, **dadurch gekennzeichnet,**
**dass** als Vorbereitungsschritt ein Sauberfahren der Extrusionsvorrichtung (10) mit einem Zwischenmaterial durchgeführt wird.

6. Extrusionsanlage (200) für die Herstellung eines Extrusionsproduktes (100), mit wenigstens einer Extrusionsvorrichtung (10), welche einen Extruder (60), eine Vorlaufwaage (30) zur Beschickung des Extruders (60) und zumindest einen Vorlaufbehälter (20) zur Beschickung der Vorlaufwaage (30) aufweist,
**dadurch gekennzeichnet,**
**dass** wenigstens eine Sensorvorrichtung (70) für die Bestimmung des Füllstands in dem zumindest einen Vorlaufbehälter (20) und/oder in der Vorlaufwaage (30) vorgesehen ist, und weiter eine Kontrolleinheit (80) vorgesehen ist, welche für die Ausführung eines Verfahrens mit den Merkmalen eines der Ansprüche 1 bis 7 ausgebildet ist.

7. Extrusionsanlage (200) nach Anspruch 6, **dadurch gekennzeichnet,**
**dass** die Sensorvorrichtung (50) wenigstens einen Sensor gemäß der nachfolgenden Liste aufweist:
- Ultraschallsensor,
- Infrarotsensor,
- Optischer Sensor,
- Lasersensor
- Wägezelle,
- Kapazitiver Sensor,
- Induktiver Sensor.,
- Drehflügelsensor oder
- Schwimmsensor.

8. Extrusionsanlage (200) nach einem der Ansprüche 6 oder 7, **dadurch gekennzeichnet,**
**dass** zwischen dem Vorlaufbehälter (20) und der Vorlaufwaage (30) eine mechanisch verriegelbare Vorlaufklappe (44) angeordnet ist.

9. Extrusionsanlage (200) nach einem der Ansprüche 6 bis 8, **dadurch gekennzeichnet,**
**dass** wenigstens eine Reinigungseinheit (50) vorgesehen ist, aufweisend zumindest eine der folgenden Ausbildungen:
- Klopfeinheit (52),
- Ausblaseinheit (54),
- Dehnbare Behälterwand,
- Poröser Schneckenzylinder,
- Aufklappbarer Schneckenzylinder oder
- Drehbarer Schneckenzylinder.

## Claims

1. A method for changing a material from a feed material to a subsequent material in an extrusion device (10) having a control unit (80) for the production of extrusion products (100), wherein the control unit (80) is designed to carry out the following method steps:
- Detection of a material change request,
- carrying out at least one preparation step for changing the material,
- carrying out the material change after completion of the at least one preparation step,
wherein the detection of a material change request takes place by means of a monitoring of a formula quantity and a pre-calculation of an extrusion quantity still to be carried out, wherein a cleaning of the extrusion device (10) or of parts of the extrusion device (10) of the feed material is carried out as a preparation step, **characterized in**
**that** one of the following is carried out as the cleaning step:
- Activation of at least one knocking unit (52) for loosening residues of the feed material,
- activation of a blow-out system (54),
- reversing the direction of rotation of a metering screw (56),
- generating an air vortex, or
- generating a pressure wave or a negative pressure wave,
wherein after the preparation step a securing step is carried out, which has the following step:
- querying the installation of all necessary containers.

2. The method according to Claim 1,
**characterized in**
**that** the emptying of a supply container (20) of the extrusion device (10) and the filling of the supply container (20) with the subsequent material is carried out as a preparation step.

3. The method according to any one of the preceding claims,
**characterized in**
**that** the emptying of a supply scale (30) and/or of a downpipe (40) between a supply container (20) and the supply scale (30) and/or a suction line (90) is carried out as a preparation step, in particular in the form of a sucking empty.

4. The method according to any one of the preceding claims,
**characterized in**
**that** a switching over from a first, large supply container (22) with the feed material to a second, smaller supply container (24) with the feed material and subsequently an emptying of the first, large supply container (22) and a filling of the first, large supply container (22) with the subsequent material is carried out as a preparation step.

5. The method according to any one of the preceding claims,
**characterized in**
**that** a clean-up of the extrusion device (10) is carried out with an intermediate material as a preparation step.

6. An extrusion system (200) for the production of an extrusion product (100), having at least one extrusion device (10), which has an extruder (60), a supply scale (30) for feeding the extruder (60) and at least one supply container (20) for feeding the supply scale (30),
**characterized in**
**that** at least one sensor device (70) is provided for the determination of the fill level in the at least one supply container (20) and/or in the supply scale (30), and furthermore a control unit (80) is provided, which is designed for carrying out a method with the features of any one of Claims 1 to 7.

7. The extrusion system (200) according to Claim 6,
**characterized in**
**that** the sensor device (50) has at least one sensor according to the following list:
- ultrasonic sensor,
- infrared sensor,
- optical sensor,
- laser sensor,
- load cell,
- capacitive sensor,
- inductive sensor,
- rotary vane sensor or
- floating sensor.

8. The extrusion system (200) according to any one of Claims 6 or 7,
**characterized in**
**that** between the supply container (20) and the supply scale (30) a mechanically lockable supply flap (44) is arranged.

9. The extrusion system (200) according to any one of Claims 6 to 8,
**characterized in**
**that** at least one cleaning unit (50) is provided, having at least one of the following formations:
- knocking unit (52),
- blow-out unit (54),
- expandable container wall,
- porous screw cylinder,
- hinged screw cylinder or
- rotatable screw cylinder.

## Revendications

1. Procédé pour un changement de matériau d'une charge d'alimentation vers un matériau secondaire dans un dispositif d'extrusion (10), avec une unité de contrôle (80) pour la fabrication de produits d'extrusion (100), l'unité de contrôle (80) étant conçue pour exécuter les étapes suivantes :
- détection d'une demande de changement de matériau,
- exécution d'au moins une étape de préparation pour le changement de matériau,
- exécution du changement de matériau après la fin de l'au moins une étape de préparation,
la détection d'une demande de changement de matériau ayant lieu par une surveillance d'une quantité de recette et un calcul à l'avance d'une quantité d'extrusion encore à effectuer, moyennant quoi l'étape de préparation étant un nettoyage du dispositif d'extrusion (10) ou de parties du dispositif d'extrusion (10) de la charge d'alimentation, **caractérisé en ce que** l'étape de nettoyage est une des étapes suivantes :
- activation d'au moins une unité de percussion (52) pour le détachement des reste de la charge d'alimentation,
- activation d'un système de soufflage (54),
- inversion du sens de rotation d'une vis de dosage (56),
- production d'un tourbillon d'air ou
- production d'une onde de pression ou d'une onde de dépression,
moyennant quoi, après l'étape de préparation, une étape de sécurisation est exécutée, qui comprend l'étape suivante :
- interrogation de l'installation de tous les récipients nécessaires

2. Procédé selon la revendication 1,
**caractérisé en ce que**
en tant qu'étape de préparation, la vidange d'un récipient d'alimentation (20) du dispositif d'extrusion (10) et le remplissage du récipient d'alimentation (20) avec le matériau secondaire sont exécutés.

3. Procédé selon l'une des revendications précédentes,
**caractérisé en ce que**
en tant qu'étape de préparation, la vidange d'une balance d'alimentation (30) et/ou d'un tube de descente (40) entre un récipient d'alimentation (20) et la balance d'alimentation (30) et/ou d'une conduite d'aspiration (90) est exécuté, plus particulièrement sous la forme d'une vidange par aspiration.

4. Procédé selon l'une des revendications précédentes,
**caractérisé en ce que**
en tant qu'étape de préparation, une commutation d'un premier grand récipient d'alimentation (22) avec la charge d'alimentation vers un deuxième récipient d'alimentation (24) plus petit avec la charge d'alimentation puis une vidange du premier grand récipient d'alimentation (22) et un remplissage du premier grand récipient d'alimentation (22) avec le matériau secondaire sont exécutés.

5. Procédé selon l'une des revendications précédentes,
**caractérisé en ce que**
en tant qu'étape de préparation, une marche propre du dispositif d'extrusion (10) avec un matériau intermédiaire est exécutée.

6. Installation d'extrusion (200) pour la fabrication d'un produit d'extrusion (100), avec au moins un dispositif d'extrusion (10), qui comprend une extrudeuse (60), une balance d'alimentation (30) pour l'alimentation de l'extrudeuse (60) et au moins un récipient d'alimentation (20) pour l'alimentation de la balance d'alimentation (30),
**caractérisé en ce que**
au moins un dispositif de capteur (70) est prévu pour la détermination de l'état de remplissage dans l'au moins un récipient d'alimentation (20) et/ou dans la balance d'alimentation (30) et une unité de contrôle (80) est en outre prévue, qui est conçue pour l'exécution d'un procédé avec les caractéristiques d'une des revendications 1 à 7.

7. Installation d'extrusion (200) selon la revendication 6,
**caractérisé en ce que**
le dispositif de capteur (50) comprend au moins un capteur selon selon la liste suivante :
- capteur à ultrasons,
- capteur infrarouge,
- capteur optique,
- capteur laser,
- cellule de pesage,
- capteur capacitif,
- capteur inductif,
- capteur à ailettes rotatives ou
- capteur flottant.

8. Installation d'extrusion (200) selon l'une des revendications 6 ou 7,
**caractérisé en ce que**
entre le récipient d'alimentation (20) et la balance d'alimentation (30), est disposé un clapet d'alimentation (44) verrouillable mécaniquement.

9. Installation d'extrusion (200) selon l'une des revendications 6 à 8,
**caractérisé en ce que**
au moins une unité de nettoyage (50) est prévue, comprenant au moins une des conceptions suivantes :
- unité de percussion (52),
- unité de soufflage (54),
- paroi de récipient poreuse,
- cylindre à vis sans fin rabattable ou
- cylindre à vis sans fin rotatif.
